(19) Europäisches Patentamt
European Patent Office
Office européen des brevets

(11) **EP 4 252 106 B1**

## (12) EUROPEAN PATENT SPECIFICATION

(45) Date of publication and mention
of the grant of the patent:
**31.01.2024 Bulletin 2024/05**

(21) Application number: **21827407.4**

(22) Date of filing: **26.11.2021**

(51) International Patent Classification (IPC):
***G06F 7/58*** *(2006.01)*

(52) Cooperative Patent Classification (CPC):
**G06F 7/58**

(86) International application number:
**PCT/GB2021/053088**

(87) International publication number:
**WO 2022/112788 (02.06.2022 Gazette 2022/22)**

(54) **RANDOM NUMBER GENERATION**

ZUFALLSZAHLENERZEUGUNG

GÉNÉRATION DE NOMBRE ALÉATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2020 GB 202018650
24.12.2020 GB 202020614**

(43) Date of publication of application:
**04.10.2023 Bulletin 2023/40**

(73) Proprietor: **PQshield Ltd
Oxford, Oxfordshire OX2 7HT (GB)**

(72) Inventor: **SAARINEN, Markku-Juhani Olavi
Oxford Oxfordshire OX2 7HT (GB)**

(74) Representative: **EIP
Fairfax House
15 Fulwood Place
London WC1V 6HU (GB)**

(56) References cited:
**US-B1- 10 333 708**

- **BLUM M: "Independent Unbiased Coin Flips From
A Correlated Biased Source: A Finite State
Markov Chain", 19841024; 19841024 - 19841026,
24 October 1984 (1984-10-24), pages 425-433,
XP010303686,**
- **Anonymous: "Lookup table - Wikipedia", , 25
October 2020 (2020-10-25), XP055827417,
Retrieved from the Internet:
URL:https://en.wikipedia.org/w/index.php?t
itle=Lookup_table&oldid=985294364 [retrieved
on 2021-07-23]**

**Description**

<u>Technical Field</u>

The present invention relates to random number generation. Specifically, but not exclusively, the invention relates to entropy sources for use in the generation of random numbers (or, random bit sequences) and to noise conditioners that can increase entropy in entropy sources and other random number generation pipelines.

<u>Background</u>

True random number generation is one of the most important parts of any computer security system as this is where secret keys and other sensitive security parameters ultimately come from. Anything less than truly random numbers, or, rather, random bit sequences, increases opportunities for cyber-attacks, which may be based on the ability to predict sequences that are not truly random.

Many schemes are known for generating random numbers. For example, certain Intel® processors offer the RDRAND or RDSEED instructions, which return random numbers from on-chip hardware random number generators that have been seeded from an on-chip entropy source.

In the present description, an entropy source is generally a hardware bit source that produces a stream of bits having a random character. Entropy sources are commonly found on-chip, as external entropy may not be available or may not be reliable. Entropy sources may generate random bits using a noise source based on phenomenon such as thermal noise from electronic circuits or systems, such as ring oscillators. For example, the entropy source for the RDSEED instruction runs asynchronously on a self-timed circuit and uses thermal noise within silicon to output a random stream of bits.

Entropy sources typically have a qualifiable level of entropy. High entropy implies high randomness whereas low entropy implies low randomness, and different entropy sources have different levels of entropy. Levels of entropy can be established using industry standard test procedures.

Often, entropy sources are not themselves used to deliver random numbers that are used by applications. Instead, the output from an entropy source may be used to seed a downstream random number generator, for example a cryptographic and/or deterministic pseudorandom number generator, which produces random numbers for use by software applications. Such downstream random number generators may be realized in hardware or software, based on random bits provided by a respective entropy source.

Certain known random number generators that are associated with large-scale integrated circuits, such as Intel™ and AMD™ processors, implement cryptographic conditioners using existing instructions, such as AES, which, for example, can take bit samples from a source and produce a conditioned (that is, an encrypted) entropy sample.

While known cryptographic conditioners perform adequately in some scenarios, they may not be appropriate for applications with resource-constrained, so-called lightweight processors and/or embedded systems, which may not have the chip real-estate or processing power to support functions such as AES. There is therefore a need for new kinds of entropy source suitable for lightweight microcontrollers, reduced instruction set architectures, such as RISK-V, and/or processors adapted for post-quantum cryptography.

The paper "Independent unbiased coin flips from a correlated biased source - a finite state Markov Chain", by M Blum, Combinatorica 6 (2) (1986), pp 97-108 describes how to take von Neumann's scheme for simulating an absolutely unbiased coin using a biased coin and extend it to generate an independent unbiased sequence of Hs and Ts from any Markov chain in expected linear time. Blum presents two algorithms - A and B - and shows that algorithm A is "bad", and that algorithm B is "good". Blum's paper is theoretical and mathematical, it does not provide a concrete design for an entropy source suitable for low-cost and embedded computing platforms. Although the "Algorithm B" is presented as a high-level method, no concrete implementation of this algorithm is provided.

<u>Summary</u>

Aspects and embodiments of the present invention are disclosed in the claims that are appended hereto.

<u>Brief Description of the Drawings</u>

Various features of the present disclosure will be apparent from the detailed description which follows, taken in conjunction with the accompanying drawings, which together illustrate features of the present disclosure, and wherein:

Figure 1 is a schematic block diagram of an architecture encompassing an entropy source and a software environment that can receive entropy bits from the entropy source, according to an example;

Figure 2 is a block diagram of a hardware noise source, according to an example;
Figure 3 is a schematic block diagram of a 1-state Markov Chain;
Figure 4 is a schematic block diagram of a 2-state Markov Chain;
Figure 5 is a schematic block diagram of a 4-state Markov Chain;
Figure 6 is a graph of how different noise conditioners perform depending on their number of Markov States;
Figure 7 is a schematic block diagram of an 8-state Markov Chain;
Figure 8 is a schematic block diagram of a hardware implementation of a noise conditioner having 8 states, according to an example;
Figure 9 is an example of pseudo-code that can perform von Neumann debiasing, according to an example;
Figure 10a is a graph of yield against sigma ($\sigma$) for a von Neumann debiaser, according to an example;
Figure 10b is a graph of a yield against sigma ($\alpha$) for a 64-state Blum B Conditioner;
Figure 11 is an architecture of a practical entropy source, according to an example; and
Figure 12 is a flow diagram illustrating the steps performed by a noise conditioner according to an example.

## Detailed Description

Examples described herein provide an entropy source for the secure and efficient generation of random number sequences. In preferred examples, the entropy source is implemented in hardware and is used as a resource by a secure kernel or operating system service for delivery of random bit sequences to applications upon a computing platform. In other examples, the entropy source may be implemented in firmware and/or software as a "protected" random number source or as a "virtual entropy source" for enclaves, simulators, and virtual machines. The entropy source may comprise a lightweight, adaptive non-cryptographic (arithmetic) noise conditioning mechanism with a particularly efficient computational arrangement. In "single vendor" implementations, where a manufacturer can control both hardware and software (e.g., firmware), the present examples may provide a set of components that ensure uncorrupted noise sources that allow for independent assessment. The present entropy source examples thus provide a minimalistic true random number generator that may be included as part of a secure microcontroller profile. The preferred hardware configuration of the entropy source may be cheaply constructed from standard cell logic components with easy synthesis via Application Specific Integrated Circuit (ASIC) flows as well as in the form of Field Programmable Gate Arrays (FPGAs) via popular FPGA development platforms.

In certain examples, both a noise source and a noise conditioner of the entropy source have continuous tests. A pre-processed noise signal from the noise source may also be available for evaluation. The entropy source may be implemented as part of a Reduced Instruction Set Computer (RISC) Central Processing Unit (CPU), such as a RISC-V CPU, and may be implemented with a noise source, noise conditioner, health tests, and a signaling mechanism for alarms. The global reset line of a CPU may serve a dual purpose of zeroization and initiating built in self tests. Noise conditioners as described herein use much less energy and have a much smaller implementation area than cryptographic conditioners, and can be free of computational hardness assumptions, making them essentially "quantum-safe". The entropy source also supports numerous "post-quantum" security standards (e.g., those set by the National Institute of Standards and Technology - NIST) and thus forms a basis for large-scale post-quantum implementations.

The example entropy sources described herein are particularly suited to providing a lightweight and secure microcontroller true random number generator that exhibits good performance within a small (silicon) area while meeting a complex set of engineering and validation requirements (e.g., such as those set by a variety of cryptographic standards). Embedded systems may particularly benefit from an on-chip entropy source as per the described implementations as for these systems external entropy may not be available or may not meet high cryptographic standards (e.g., may be open to manipulation and/or may generally not be trustworthy).

The described examples may allow certain requirements for a true random number generator to be provided by a dedicated hardware (or software) entropy source. This then reduces the need for computationally intensive cryptographic conditioning in software prior to use. The present entropy source examples are a departure from previous CPU-based random number generation, which are often "30 parts" later cryptographic conditioning and "1 part" entropy generation. This is typically the case as these CPU-based random number generators were open to cryptographic attack or manipulation. The present examples further provide an entropy source wherein additional random bits may be supplied as desired (e.g., as polled). In comparative CPU-based random number generators (such as those used in Intel® processors), for larger bit sequences (e.g., over 128 bits) large blocks (e.g., 512-bit blocks) may need to be computed in a manner that is resource intensive, especially for battery-powered or other embedded implementations.

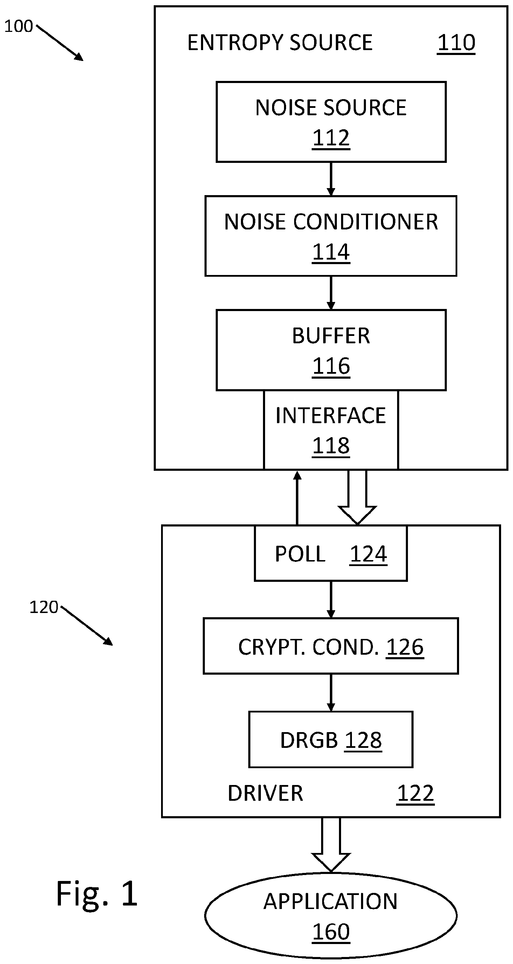

Figure 1 illustrates an architecture 100 that can be applied to examples herein. The architecture 100 comprises an entropy source 110, in this case (but not necessarily) a hardware entropy source, including a noise source 112, a noise conditioner 114, a buffer 116 to receive and store entropy bits from the noise conditioner 114, and a hardware interface 118, to receive polling signals and deliver entropy bits.

For the present purposes, a noise conditioner 114 is to increase the entropy of bits received from the noise source 112, and may be thought of as a device or processing module that aims to retain "significant" features or entropic bits of a bitstream while discarding features that are known (for instance from a model) to be redundant. For example, if it is assumed in an electronic circuit such as a ring oscillator that per-cycle jitter accumulates at a constant rate, a low-frequency input (which contains fewer cycles) may have more bits to 'throw away' than a high-frequency input. In the case of a low-frequency oscillator source, for example, discarded bits may comprise long runs of zeros or ones while the least significant bit of those run lengths might retain a significant amount of entropy. A noise conditioner 114 in that context may be seen as analogous with a dynamic "lossy compression algorithm".

The architecture 100 also comprises software 120, including a software driver 122 and a software application 160. The software driver 122 comprises a polling interface 124 to interact with the hardware interface 118 by sending polling signals and receiving entropy bits. The software driver 122 may include a further conditioner 126, such as cryptographic conditioner, and/or a deterministic random number generator (DRNG) 126, that takes the entropy bits and produces random bits of a required standard that are required by the software application 160.

In the present example, the software application 160 may be a cryptographic application, which receives entropy bits from the entropy source 110 via the software driver 122. The software driver, when instructed by the software application 160, polls the buffer 116 via the hardware interface 118 and receives a stream of bits, for example 256 bits (if the buffer has 256 locations). The entropy source 110 may only deliver the entropy bits once the buffer 116 is full. The make-up of the software driver 122 and software application 160 varies according to the use case and further details are not provided herein. The entropy source 110 may, in certain cases, be implemented as part of a secure microcontroller profile for a RISC-based processor, such as a RISC-V processor.

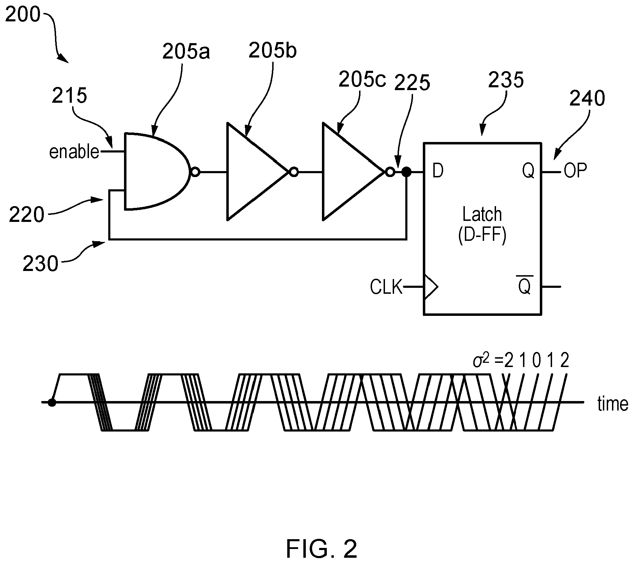

Figure 2 shows a noise source 200 suitable for the entropy source 110 of the present example. The noise source 200 in this example is a hardware circuit comprising a ring oscillator made up for an odd number of NOT gates 205a, 205b, 205c (invertors) connected in a free-running loop. As is known, an odd number of NOT gates allows for oscillation, as the output is single-ended and inverted. In this example, there are effectively three NOT gates. The first NOT gate 205a is realized as a NAND gate, whereby an enable signal 'enable' applied to an enable input 215 of the NAND gate activates the circuit and causes the NAND gate to operate, logically, as a first NOT gate in the loop. Accordingly, the ring oscillator operates when the enable signal is ' 1' and the value output by the NAND gate is the inverse of an input applied to a second input of the NAND gate. The second input 220 to the NAND gate is fed-back from an output 225 of the last NOT gate 205c in the loop by a feedback line 230. Output bits are sampled at an output of the loop 225 by a D-type latch 235, which is clocked by a system clock CLK signal. The system clock runs at a lower rate than the free-running frequency of the loop. The noise source 200 outputs noise bits from an output 240 of the latch 235.

Ring oscillators, of the kind illustrated in Figure 2, are known to be used as noise sources. When running, the timing of transitions ($1\rightarrow0$ or $0\rightarrow1$) is affected by electronic phase noise and becomes more unpredictable (that is, apparently more random) over time. A signal level at the output of the ring oscillator can therefore be sampled periodically, for instance by a clocked latch 235 as shown, to derive 'noise' samples that are used to generate bits that are input to the noise conditioner 114. The noise samples are of course not perfectly random and can typically be seen to exhibit a degree of bias and/or correlation, but the randomness can be improved by downstream conditioning, as will be described. In implementations, a noise source such as that shown in Figures 1 and 2 may be implemented using digital or analog circuits, or stochastic simulators. In a preferred implementation, the noise source 110, 200 may be implemented using standard cell logic components, such as those available to ASIC or FPGA implementations.

The randomness of a ring oscillator is attributed to timing jitter. Timing jitter can be shown to have a strongly Gaussian character and is seen to accumulate in a phase difference against a reference clock, CLK, with variance $\sigma_t^2$ growing almost linearly from one cycle to the next.

It is noted that comparative noise sources such as an XOR sequence of multiple rung oscillators were considered. However, such constructions were found to lead to pseudorandom generators, where output sequences look random even without much jitter. This made it difficult to accurately estimate the produced entropy.

Under common conditions, transition time standard deviation (uncertainty) $\sigma_t$ after time t can be estimated, for instance, for CMOS ring oscillators as:

$$\sigma_t^2 \approx \frac{8}{3\eta} \cdot \frac{kT}{P} \cdot \frac{V_{DD}}{V_{char}} \cdot t$$

with time t, proportionality constant $\eta \approx 1$, Boltzmann constant $k$, absolute temperature $T$, power dissipation P, supply voltage $V_{DD}$, and device characteristic voltage $V_{char}$. It has been observed for the present purposes that the number, N, of NOT gates in the loop does not materially impact performance, although N and the frequency $f$ affect P via known dynamic switching equations.

It is evident from the foregoing equation that variations in temperature and voltage can materially impact ring oscillator jitter and, consequently, the level of entropy of a respective noise source. It has therefore been appreciated for the present purposes that entropy sources may benefit from a degree of adaptive behavior, to adapt to increasing or decreasing levels of entropy, as will be described further herein.

Other examples may use alternative noise sources. These include continuous and shot (Poisson) electronic noise processes, such as those from noisy diodes. Physical sources that can be digitized as noise input include thermal, optical, mechanical, and quantum phenomena. Quantum phenomenon yielding randomness includes quantum state superposition, quantum state entanglement, Heisenberg uncertainty, quantum tunneling, spontaneous emission or radioactive decay. Noise sources do not need to be directly physical; examples of derived random sources include system events and communications traffic in a computer system. Other examples based on the teachings herein may employ any such alternative noise sources.

Entropy sources may comprise a conditioner, sometimes referred to as a noise conditioner, to increase the entropy of a bit stream delivered by the entropy source. Entropy may be increased, for example, by removing redundant bits, such as long streams of 0s or 1s, or artifacts that characterise the noise source, which would otherwise act to reduce the entropy of the entropy source.

The noise conditioner 114 of the present example employs functions and logic that implement one or more Markov Chains to condition bits that are output from the noise source 112. Using Markov Chains in a so-called deterministic circuit can be criticized (for example, see David Johnston, "Random Number Generators - Principles and Practices: A Guide for Engineers and Programmers", De Gruyter, 2018) because Markov Chains only have a finite set of states whereas real-world entropy bits, for example derived from a noise source 112 as described, arguably have an infinite number of states. It is therefore impossible for a practical Markov Chain to track all possible states of real-world entropy bitstreams. It is also perhaps counterintuitive to expect a 'stateful conditioner' to be able to make bits in a bitstream more independent. However, it has been determined herein that use of Markov Chains, even with only a few states, greatly helps to reduce bias and correlation in entropy bits produced by a noise source 112. Indeed, it has been shown that Markov Chains as applied herein in noise conditioners can increase entropy to well-above the lower threshold demanded by industry standards.

In certain examples described herein, a noise conditioner is used as a device that is configured to retain "significant" features or entropic bits while discarding bit sequences that are known from a model to be redundant. The noise conditioner may be seen as implementing a form of lossy compression algorithm on the raw noise source. In certain cases, the noise conditioning within the entropy source may be followed by cryptographic conditioning (e.g., within software following polling) such as a hash function that further evenly distributes input entropy to output bits. In examples, the noise conditioner may be configured to provide adequate independent entropy content under both normal and adversarial conditions. If noise (e.g., bits from the noise source) cannot be processed to meet a desired set of constraints, the entropy source has characteristic, identifiable failure modes and mechanisms to detect them. This is all provided within implementation circuitry that is small and power efficient.

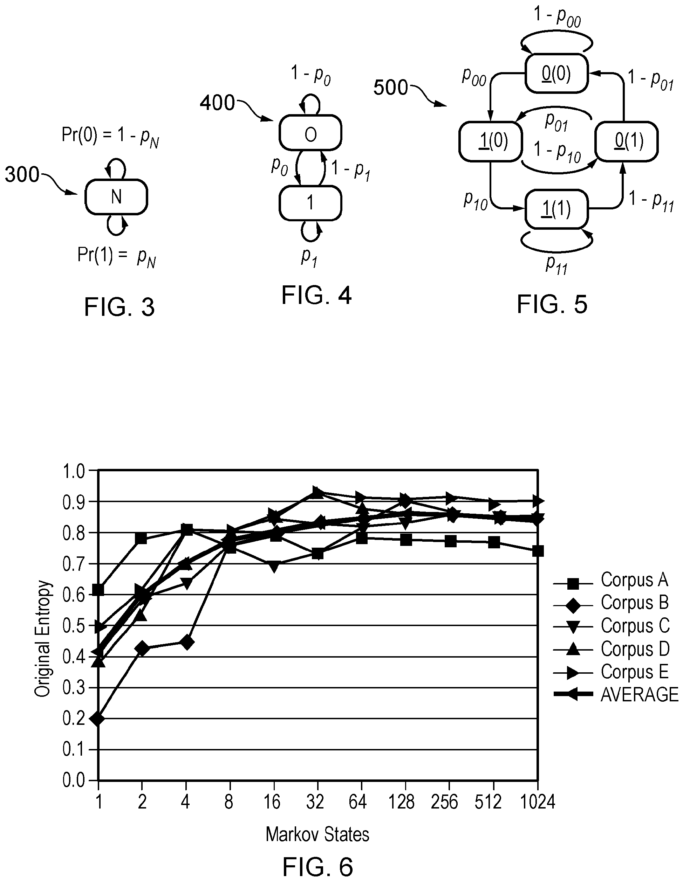

Figures 3, 4 and 5, respectively, show examples of Markov Chains that may be modelled as part of a noise conditioner implementation. Figure 3 is a first example of a Markov Chain 300, which has one state, N. The arrangement of Figure 3 may also be applied as a so-called von Neumann debiaser, as will be described. In the Markov Chain 300 of Figure 3, the one state N can be 0 or 1 (or heads H or tails T), and the state has two possible transitions Pr(0) = pN and Pr(1) = 1 - pN. In an unbiased system, such as one using an unbiased coin toss to determine transitions, Pr(0)=Pr(1)=0.5. In a biased system, however, for instance one in which a series of coin tosses delivers far more heads than tails, such that Pr(0) ≠ Pr(1), a von Neumann debiaser based on a one state Markov Chain can be used to debias the sequence by considering pairs of coin tosses. The von Neumann debiaser may attribute a 0 to the sequence H-T and a 1 to the sequence T-H, and discount any sequence comprising H-H or T-T. This produces an unbiased bit stream, noting that Pr(0).Pr(1) = Pr(1).Pr(0) = pN.(1 - pN). Consequently, a conditioner based on a von Neumann debiaser produces unbiased output bits irrespective of input bit entropy level, without prior knowledge of pN and with an output rate of up to 25% of the input sequence bit rate, as long as the coins (output bits) are not correlated. Correlation may be, for example, long runs "HHHHHHTTTTTT", which could indicate a "positive" serial correlation, while an alternating pattern "HTHTHTHTHT", could indicate a "negative" serial correlation. Either kind of correlation may be an artefact of an imperfect noise source 112 or imperfect environmental conditions (for instance, very low operating temperatures) for the noise source 112. Correlation generally is an undesirable property in relation to randomness as it may assist in the prediction of a next output coin from previous coin tosses. Note that neither of the foregoing examples has any absolute bias; H=1/2 and T=1/2, which is why a basic von Neumann conditioner offers no protection against serial correlation (just against absolute bias, assuming that it stays constant in the source), which is why further measures are required, as will be described.

Correlation can be mitigated using an n-state Markov model, as was proposed by Manuel Blum, where n>1. Figure 4 shows a 2-state Markov Chain 400 and Figure 5 shows a 4-state Markov Chain 500. Each Markov Chain is shown with the respective transitions and the accompanying probabilities of the transitions occurring. As will be described, the 2-state Markov Chain 400 is capable of mitigating correlation between a current and a previous bit, and the 4-state Markov Chain 500 is capable of mitigating correlation between a current bit and two preceding bits. More generally, it is found that a $2^k$-state Markov Chain can mitigate local correlation for up to k preceding bits.

For a Markov Chain, a single input bit, together with the current state $0 \leq i < n$, determines the next state; there are again two choices with complementary probabilities pi and 1 - pi for which exit from the state is taken. It is assumed that these "exit probabilities" are static, insofar as they do not change over time. With these assumptions, an arbitrary state may be selected, state transitions tracked, and exit bits recorded only from that single state. The resulting bit sequence would have an uncorrelated bias pi. It has been appreciated that one can then apply a von Neumann debiaser to only those bits to produce a bit sequence that is simultaneously decorrelated (via the foregoing state-correlation assumption) and unbiased.

Blum observed that a straightforward approach to increasing output rate by viewing every state as an independent von Neumann debiaser and directly merging their outputs does not yield independent, unbiased output bits. In an alternative approach, therefore, Blum proposed a modification to address this, assuming that the Markov assumption (that is, the memoryless property of a stochastic model) holds but without knowledge of its static exit probabilities. The modification is presented in Blum's so-called "Algorithm B" (as presented in "Independent unbiased coin flips from a correlated biased source - a finite state Markov Chain", M Blum, Combinatorica 6 (2) (1986), pp 97-108). In this variant, the model outputs a (debiased) von Neumann bit from a state only after that state is re-entered. Due to this delay, the approach adopted by Algorithm B is said to be 'patient'.

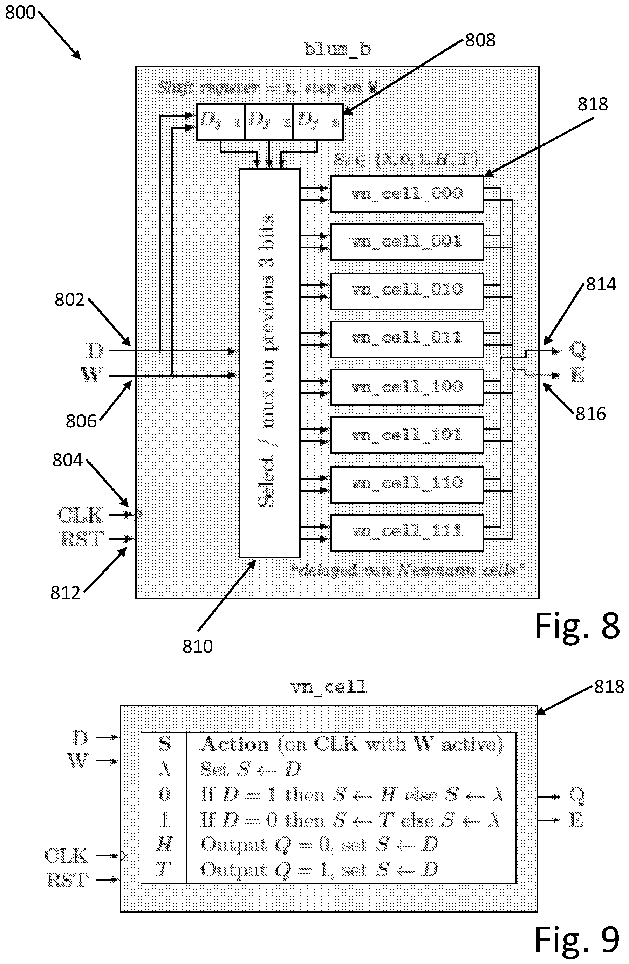

A conditioner herein that operates generally in accord with or implements Blum's Algorithm B is referred to as a Blum B Conditioner. Implementations described herein address a common criticism of Blum's algorithm, namely that real-world entropy source circuits tend to have infinite states. It is thus not possible to track those states well. A naive implementation of Blum's algorithm thus needs to address the need to track states. In the present examples, it has been found that a multiple stage, multiple state arrangement such as shown in Figures 8, 9 and 11 provides an efficient yet workable noise conditioning configuration to address this. The noise conditioners set out herein have been tested to work with a wide variety of noise sources as well as simulations. Tests also included subjecting noise source devices (e.g., FPGAs implementing the noise source) to a variety of environment temperatures (including as low as -50°C) and allowing long runs (e.g., to test for ring oscillator phase lock). It is noted that many theoretical models do not consider how an entropy source will perform under real-world conditions, nor do they consider resource constraints such as silicon area or computation cycles.

Experiments performed for the present purposes considered the Markov Chain 400 in Figure 4. The experiments, using real ring oscillators, demonstrated that, by having two states (and two "von Neumann debiasers") a conditioner is able to significantly mitigate the common problem of strong positive or negative serial correlation between immediately consecutive bits, which exhibits itself as 0/1 runs or alternating patterns (..010101..). In such a two-state model, the probability p0 of a 1 bit following a 0 bit is different (and independent) from the probability p1 of a 1 bit following another 1 bit. While it is possible to identify limitations of such simple decorrelation, it is still much more effective than assuming that the two exit probabilities are the same.

For the present purposes, the performance of different conditioners has been evaluated using a range of noise corpus datasets {Corpus A-Corpus E}. On the graph in Figure 6, the x-axis is the number of Markov states in a conditioner and the scale on the y-axis represents the entropy of various noise corpus datasets once the datasets have been conditioned using the different conditioners, ranging from a von Neumann debiaser (with 1 Markov state) through various Blum B Conditioners having a number $2^k$ of Markov states, where k ranges from 2 to 10. As can be seen, entropy increases rapidly up to k=3, while, after k=3, entropy levels-off (settling in the region of 0.8-0.9), despite an increasing number of Markov states.

From a practical point of view, therefore, it has been shown that a $2^3 = 8$ state Blum B Conditioner is capable of offering relatively high entropy, in the form of unbiased and relatively uncorrelated bits, while having a minimal architectural and power overhead in, for example, an embedded processor. In other words, although a Blum B Conditioner with more states can be applied to examples herein, the architectural overhead of the additional states typically would not be warranted due to the relatively small increase in entropy of the resulting bit sequence. In addition, if it is assumed that correlation is the strongest with most recent bits inputted from a noise source, an 8-state Blum B Conditioner should be expected to perform decorrelation adequately most of the time.

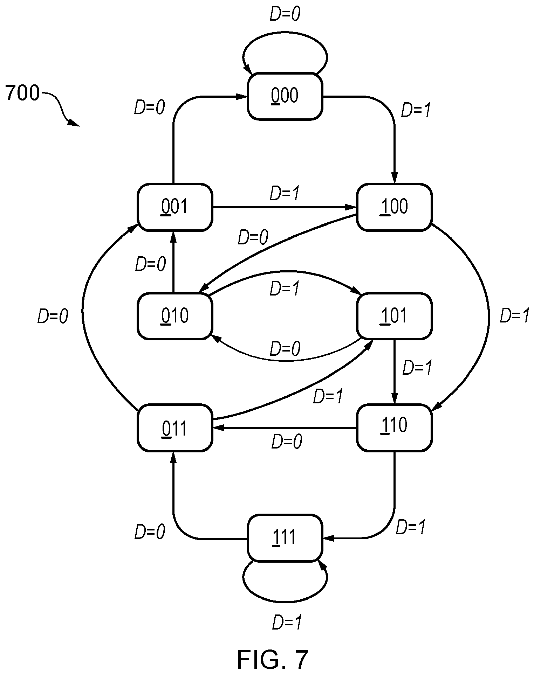

A Markov Chain 700 for an 8-state Blum B Conditioner, which can be implemented according to the present example, is shown in Figure 7. Each possible transition between states (due to a new bit *D* arriving) is shown in Figure 7. More specifically, each state has two possible entrance transitions and two possible exit transitions. For example, state 000 can be entered from state 001 (when the next bit *D*=0) and from itself (when the next bit *D*=0). The exit transitions from state 000 are to state 100 (when the next bit *D*=1) and to itself (when the next bit *D*=0). In another example, state 110 can be entered from state 101 (when the next bit *D*=1) and from state 100 (when the next bit *D*=1). The exit transitions from state 110 are to state 111 (when the next bit *D*=1 and to state 011 (when the next bit *D*=0). And so forth. Such a state machine proves effective as a conditioner to remove bias and address at least k=3 (for the previous three states) local correlation in relation to the input bits, as will be described.

An architecture arranged to implement an 8-state Blum B Conditioner 800, implementing the Markov Chain 700 of Figure 7, is shown in Figure 8. The Blum B Conditioner comprises an input D 802 which receives samples ('0' or '1') from the output 240 of the noise source 200 (Figure 2). An input bitstream, comprising the input bits, when clocked by a clock signal CLK 804, when an enable input W 806 is active, are loaded into and feed a shift register arrangement 808 and a selector 810. The architecture 800 also has a reset input RST 812 to reset (or re-prime) the conditioner if necessary. The architecture 800 further has an output Q 814, to output debiased/decorrelated bit values forming an output bitstream, and an enable output E 816, which takes the value of the enable line W 806 to downstream modules.

Because a shift register arrangement operates as a memory of the previous input bits, it has been appreciated that the shift register arrangement can approximate the state of the Blum B Conditioner (or, indeed, any circuit that realizes a Markov Chain) and represent or correspond with the respective transitions. Accordingly, a one-bit shift register can be used in a 2-state Markov Chain, a two-bit shift register can be used in a 4-state Markov Chain, and, as for this current example, a 3-bit shift register can be used in a 8-state Markov Chain, and so forth. Any appropriate arrangement of memory and instructions/logic circuitry may be applied in examples herein to perform the role of the shift register arrangement 808.

The selector 810 is arranged to select one of eight destination logic cells, in this example comprising von Neumann cells 818, which perform von Neumann debiasing, as will be described, according to addressing or selection determined by the bit values $\{D_{j-1}, D_{j-2}, D_{j-3}\}$ in the shift register arrangement 808. The input D is sent to a selected von Neumann cell 818 by the selector 810. The selected von Neumann cell 818 produces an output Q of the Blum B Conditioner based on its current state S and the value of the new input bit D. The remaining seven von Neumann cells maintain their states and do not perform any function until they are again selected by the selector 810. On a next clock cycle CLK, the input bit D enters the shift register arrangement 808 at $D_{j-1}$ and the oldest bit in the shift register 808, $D_{j-3}$, is dropped or discarded. Any appropriate arrangement of memory and instructions/logic circuitry may be applied in examples herein to perform the role of the selector 810.

As will be appreciated, as input bits enter the shift register arrangement 808, the selector 801 selects the von Neumann cells 818 in accordance with the transitions between cells that are represented by the Markov Chain 700 in Figure 7, and thereby perform decorrelation. Any appropriate arrangement of memory and instructions/logic circuitry may be applied in examples herein to perform the role of the von Neumann cells 818.

The operation of the architecture of Figure 8, in terms of transitions that equate to selection of the next von Neumann cell 818, can be illustrated as follows. Assume an input stream of bits is {a,b,c,d,e,f}. As the input bits 'clock' into the shift register arrangement 810, the following addresses are generated: [cba, dcb, edc, fed] (because the new bit D always goes into a left cell of the shift register arrangement 808 and the rightmost bit drops out of the right cell of the shift register). If, for example, the values of {a,b,c,d,e,f} = {0,1,0,1,1,0}, the resulting transitions in the Markov Chain 700 in Figure 7 are seen to be: 010(d=1)→101(e=1)→110(f=0)→011.

Of course, feeding bits into the left-hand side of the shift register arrangement 808 is only one option. Feeding bits into the right-hand side of the shift register arrangement 808 is also viable, and, in that case, would deliver addresses: [abc, bcd, cde, defJ, and the shift register arrangement 808 would operate instead like a 'sliding window' over the input bit stream. In this case, certain transitions in the Markov Chain 700 would need to be altered to match the new set of possible transitions.

It will be appreciated that the architecture in Figure 8 does not perform decorrelation perfectly, according to Blum's Algorithm B, because perfect decorrelation requires that the state transitions of a Markov Chain exactly match the stochastic model of a respective noise source, which would be impractical. The shift register/addressing approach applied by Figure 8, however, is found to provide a high degree of decorrelation, at least insofar as it holds true that correlation is the strongest with most recent bits inputted from a noise source.

The von Neumann cells 818 follow logic to process input bits D according to the pseudo-code in Figure 9. Each von Neumann cell has five possible states $S_i=\{\lambda,0,1,H,T\}$ and inputs/outputs that match those of the Blum B Conditioner 800. The next input bit D and the current state S determine the behavior of the von Neumann cell 818, which operates, as already mentioned, on sequences of pairs of input bits to perform von Neumann debiasing.

In operation of the von Neumann cell, and with reference to Figure 9:

Action (on CLK with W active and input D):

 o when $S=\lambda$, S takes the value of D
 o if D=1 when S=0, S takes 'H' or else S takes $\lambda$
 o if D=0 when S=1, S takes 'T' or else S takes $\lambda$
 o Output Q=0 and set S to the value of D when S= 'H'
 o Output Q=1 and set S to the value of D when S= 'T'

As has already been indicated, the input bits D 802, when clocked by the clock signal CLK 804 (when the enable input W 806 is active), feed the shift register arrangement 808 and the selector 810 and produce an output Q 814 (or not) according to the logic. In producing an output, the state is set to the value of D independently of whether the $S = H$ or $T.$ This can be thought of as "wipe-on-read". Each von Neumann cell may be efficiently implemented using three internal flip-flops to store the state and externally each cell may be provided with a simple serial datastream interface.

One advantage of the two-stage noise conditioner as described in Figures 8, 9 and 11 is that while it loses some entropy bits, its states rapidly adapt to the noise characteristics, even potentially changing its output rate as characteristics of the noise change. This makes the entropy source able to cope with the less than "perfect" behaviour of real-world noise sources in a practical manner, and contrasts with academic or theoretical models that assume and demand theoretical perfection. It also enables the entropy source to use different noise sources, e.g. the same noise conditioner may be synthesized with a different noise source and adapt its output accordingly.

In arriving at exemplary designs herein, various entropy source configurations have been modelled and tested assuming a sampled, digital oscillator noise source. For sampled, digital oscillator sources, signal amplitude is ignored and a pulse wave with a period $T$ is considered with a relative pulse width ("duty cycle") $D$. A constant sampling rate is assumed and the sample bits are used as a measure of time.

A sinusoidal phase $\omega$ is normalized with $x = (\omega-\delta) / 2\pi$ to range $0 \leq x < 1$, where $\delta$ is a leading edge location. Base frequency $F=1/T$ is a per bit increment to phase and per bit jitter $\sigma^2$ its variance. The behavior of a (F,D, $\sigma^2$) noise source sampler can then be modelled as

$$x_i = \left[x_{i-1} + \mathcal{N}(F, \sigma^2)\right] \bmod 1$$

$$z_i = \begin{cases} 1 & \text{if } x_i < D, \\ 0 & \text{if } x_i \geq D. \end{cases}$$

where

$$x \bmod 1 \equiv x - \lfloor x \rfloor$$

Given some initial state $x_0$, and using a normal distribution random generator (sampler) $N_\$$, these two equations can be used to generate a simulated sequence of bits $z_1, z_2, z_3, ..$ matching the model. The per-bit variance $\sigma^2$ is related to a "RMS jitter" measure $t_{jit(cc)}$ via standard deviation $\sqrt{(\sigma^2/F)}$.

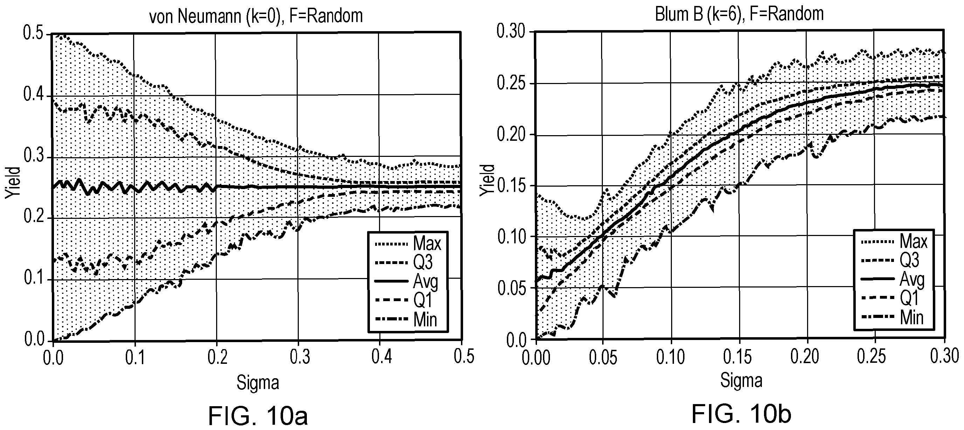

Figure 10a is a graph that shows the results of simulating jitter randomness (sigma, $\sigma$) according to the foregoing model against yield for a single state von Neumann debiaser and Figure 10b is a graph that shows the same results but for a Blum B Conditioner having 64 states (that is, k=6) and a sliding-window shift register design.

Yield (y axis) on the graphs is a ratio of the number of bits output from the conditioner to the number of bits input into the conditioner. Yield is an important parameter not only because it indicates the "output speed" of the conditioner for any given input bit rate but also because it indicates accumulated RMS jitter, which is approximately $\sqrt{(\sigma^2/Y)}$.

Since initially some bits are discarded by the Blum B Conditioner (as all states are initially "$\lambda$"), a continuous yield was approximated by feeding the conditioners 2000 bits with given parameters (F, D, $\sigma^2$) and measuring how many bits were output. In the case of the von Neumann debiaser, the output can be between 0 and 500 (maximum yield 0.5, the first 1000 bits having been discarded). The simulations used n = 40000 samples (of 1000 bits) each. As a von Neumann debiaser is expected to handle basic bias perfectly, bias was set to a duty cycle $D = ½$. Frequency $F$ was random modulo the sampling frequency - between 0 and the "Nyquist bound" ½.

As shown in Figure 10a, the yield of a von Neumann debiaser is averaged at $Y = 0.25$ regardless of jitter. As $\sigma$ increases, the yield for the von Neumann debiaser is maintained at an average of 0.25 with a decreasing variance about the average, such that by the time $\sigma$ approaches 0.4, yield remains in the range of about 0.2-0.3. In contrast, the Blum B Conditioner also yields $Y = 0.25$ when $\sigma$ is large enough (and with a low variance in yield of <0.1, and delivers an almost linear jitter response (approximating to Y= 0.06 + 0.9 × $\sigma$) when $\sigma$ < 0.20. This is a desirable response characteristic since there is more jitter entropy accumulated for each output byte when its variance goes down. In practical terms, this demonstrates that the Blum B Conditioner is adaptive, producing fewer entropy bits when $\sigma$ (and hence the level of entropy) of the input bitstream is low and increasingly more bits as the $\sigma$ (and hence the level of entropy) increases. The Blum B Conditioner approaches a yield of 0.25, the same average level as the von Neuman debiaser, when the input bitstream has a sufficiently high sigma (and level of entropy).

The adaptive nature of the Blum B Conditioner not only means that the conditioner will work with different kinds of noise source, it also means that as environmental parameters, especially temperature, change, a minimum level of entropy of the output bits will be maintained. This is extremely important for devices and systems that can be installed in all manner of different and/or extreme locations and environments, unlike computer servers and other computer systems that typically reside in temperature-controlled environments. For the present purposes, performance was tested with varying temperatures of operation down to - 50°C by freezing the circuitry using freeze spray, and the adaptive nature of the Blum B Conditioner was in accord with the modelling.

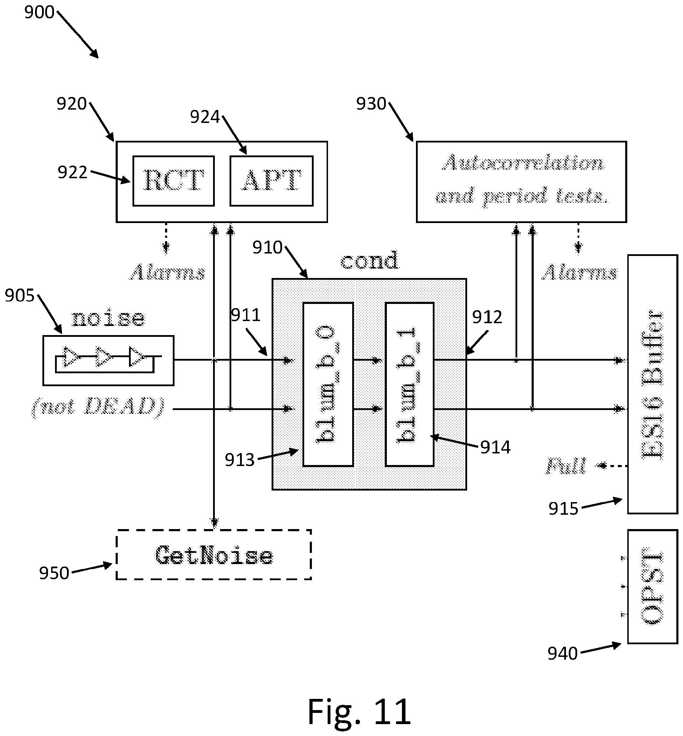

Considering a practical design for a Blum B Conditioner, it is noted that bit-pattern state $i$ of a Blum B Conditioner is capable of "isolating" local entropy "features" such as leading and falling edges to perform decorrelation. However, the scope of such decorrelation is in relation to $k$ input bits, rather than output bits, which is perceived to be a problem for low-entropy or variable-entropy noise sources. As has been alluded to, increasing the number of states, k, may improve the situation marginally but doing so leads to diminishing returns and is at the cost of an exponentially-growing circuit footprint. Hence, examples herein apply two stages of conditioner each with a modest number of states (and relatively low real estate overhead) each, rather than a single conditioner with a far greater number of states. In one example, both stages of conditioner are Blum B Conditioners. In this way, two stages of variable-yield, adaptive noise conditions combine to mitigate more macroscopic features. Conveniently, both stages of Blum B Conditioner employ $k$=3 (8-states). Having two 8-state stages has the potential to provide better adaptive performance than a single conditioner that is limited to a window of 6-bits, in addition to having a smaller implementation size. In other words, since both Blum B Conditioners are adaptively dynamic, the overall "memory" reaches well past 6-bits in the distance, and so the performance of the $2 \times$ 8-state Blum B Conditioners, should provide better decorrelation and yield than a single 64-state Blum B Conditioner. The configuration of Figures 8 and 11 thus provides an improved entropy source that is not suggested by a standard implementation of Blum's "Algorithm B". For example, the entropy source may be efficiently implemented with hardware, e.g. to provide a RISC-V entropy source interface on RISC-V-derived embedded and low-cost chips. The entropy source may then provide a secure source of random bits for advanced yet efficient cryptographic applications, such as post-quantum cryptography in smart-cards and other smart-devices.

This is useful for strongly biased or serially conditioned input; for example the first "feature detection" stage might have a yield of only 0.1; the output from the second stage sees 3 bits from that it is a function of 3/0.1 = 30 raw noise bits rather than 6.

Certain examples described herein thus provide a two-stage noise conditioner that goes against conventional design principles. For example, it is normally desired to avoid pseudorandomness in the entropy path before any cryptographic conditioner. The present examples however use a stateful conditioner. Yet this stateful conditioner is applied to help make output bits more independent. For example, a differing input bit will cause a branch to a different delayed von Neumann cell and the input bit to the von Neumann cell sets the state change of the cell. This results in a cascade of branching states based on the input bits while the carry-on effect is limited via a "wipe on read" property as implemented by the von Neumann cell (e.g., when a bit is read from a state, the state bit Si is set to λ and no longer contains information about that output bit).

An example of a practical entropy source 900 is illustrated in Figure 11. The structure of the entropy source 900 broadly follows the hardware part 110 of the architecture in Figure 1. Specifically, the entropy source 900 has a noise source 905, a noise conditioner 910 and a buffer 915 that can be polled by a software driver (not shown). The noise conditioner 910 is further characterized by having two stages 913, 914 of noise conditioning, comprising a first Blum B Conditioner in series with a second Blum B Conditioner, wherein outputs Q, E from the first stage enter the second stage as inputs D, W. The noise conditioner has an input 911 to receive bits from the noise source 905 and an output 912 to deliver bits to the buffer 915. According to an example, each Blum B Conditioner of the noise conditioner 910 is an 8-state Blum B Conditioner. Both Blum B Conditioners are arranged, for example, according to Figure 8. For example, each noise conditioning stage (i.e., implemented as a Blum B conditioner) may comprise a $k$-bit shift register arrangement 808 to store a set of previous input bit values, a set of von Neumann cells 818 to perform von Neumann debiasing, each von Neumann cell having a state S, and a selector 810 to select one of the set of von Neumann cells 818 to receive an input bit value and to conditionally generate an output bit value based on the bit values in the shift register arrangement, the state of the selected von Neumann cell being updated following selection. The noise source 905 outputs a first sequence of bits 911 in the form of "raw" noise bits and the noise conditioner 910 receives the first sequence of bits 911 from the noise source 905 and outputs a second sequence of decorrelated bits 912. The noise conditioner 910 comprises a plurality of noise conditioning stages 913, 914 communicatively coupled in series. The buffer 915 receives and stores the second sequence of decorrelated bits from the noise conditioner 910. The buffer 915 is arranged to be polled to deliver a number of bits as an output random bit sequence, e.g. to a software driver that polls the entropy source and retrieves bits from the buffer when full.

As shown in Figure 11, according to an example, both the noise source 905 and the output of the noise conditioner 911 optionally have online tests 920, 930 that can cause alarms. According to the example, Operational Status (OPST) 940, which can be polled or read by external software, for instance a software driver, is determined by any such alarms and/or a state of the buffer 915, and entropy bits are made available via a Poll_Entropy instruction if the buffer 915 is full and no alarms have occurred. The OPST 940 may comprise bits that are accessible in a status register. OPST 940 indicators, according to an example, are ES16 (state:01 - no alarms, buffer full and can deliver entropy bits), WAIT (state: 10 - buffer not yet full), BIST (state:00 - built-in self-test, which occurs after an operational reset RST or after a recoverable failure is detected), DEAD (state: 11 - fatal/unrecoverable - the entropy source is operating below an expected threshold or is inoperative). Online tests and/or access to the raw noise may allow continuous testing and evaluation. This may be used to identify security risks or attacks and to check secure functioning. In certain implementation, a global reset (RST) line of a processor may have a dual purpose of zeroization and initiating the built-in self-test (BIST).

The noise conditioner in Figure 11 also optionally has a GetNoise interface, which can be used (for instance, via a software driver 122) to read raw samples from the noise source 905 prior to noise conditioning. In this way, the performance of the noise source 905, and the quality of the bits that are generated, can be evaluated outside of the entropy source using known techniques.

According to examples herein, two false-positive rates are applied to the online tests. A first rate $\alpha=2^{-64}$ indicates fatal noise source failures and a second rate $\beta=2^{-20}$ indicates recoverable entropy source failures. The rates may be expressed "per bit tested". The bounds are configurable and can be set according to use case.

For the present purposes, fatal failure rate $\alpha$ is expressed in relation to the noise source bits. It is chosen so that it should not significantly affect an overall failure rate of the system, even if the continuously-running noise source is relatively fast. The false-positive rate reaches 50% for each test after about 400/GHz-years, depending on the associated sampling frequency.

The secondary alarm rate $\beta$ is interpreted in relation to noise conditioner output bits, assuming a software driver 122 has a cryptographic conditioner 126 that processes 16 × 16 = 256-bit ES16 blocks. Thus, for four tests, it can be seen that $1-(1-\beta)^{4\cdot256} \approx 0.001$, so that approximately 1 in 1000 entropy source blocks will produce a recoverable alarm. This was chosen to be high enough so that a rate of non-fatal alarms can be monitored. It can be seen that after three immediately consecutive failures, a fatal bound is met if it is assumed a 1/16 noise conditioner yield (them $\beta^3/16=\alpha$).

The online test 920 for the noise source 905 comprises a repetition count test (RCT) 922 and an adaptive proportion test (APT) 924. Both tests aim to have a threshold entropy level below which an alarm is generated and prevents entropy bits from being output from the entropy source 900. According to the present example, the entropy level (min-entropy) is set to $H=0.5$, which corresponds to a maximum probability of $p=2^{-0.5}=0.7071$. Of course, the noise source (a ring oscillator, according to the example) is designed to be better than that and so if any bias worse than this emerges it is likely that there has been a degradation or failure in the respective circuitry.

According to the present example, the RCT 922 counts repeated identical samples (runs of 1s or 0s). A fatal cutoff threshold is set below which an alarm is generated and prevents entropy bits from being output from the entropy source 900. According to the present example, the fatal cutoff is computed as:

$$C_{rct} = 1 + \lceil -\log_2(\alpha)/H \rceil = 129$$

such that any run of a repeated sample above 129 bits generates the alarm. Other thresholds can be employed according to the use case.

According to the present example, the APT 924 is a simple bias test, as follows. Let $B_0$ and $B_1$ be the number of 0 or 1 bits in a window $W$ of 1024 bits. A fatal alarm is triggered when $\{B_0, B_1\} \geq C_{apt}$ for a cutoff value of $C_{apt}$.

$$W \cdot \alpha \approx 2 \cdot \sum_{i=C_{apt}}^{W} \binom{W}{i} 2^{-iH}(1 - 2^{-H})^{W-i}$$

At min-entropy $H=0.5$, $C_{apt}=841$, whereby a value above this threshold causes a fatal alarm which prevents entropy bits from being output from the entropy source 900. Other thresholds can be employed according to the use case.

Regarding performance of the noise conditioner 910, if, say, pseudorandom behavior of the noise source is causing significant overall entropy loss (due, for example, to external interference or a complex phase lock), bias or short repeating patterns might be expected. These can be tested for using an autocorrelation test, for example, by XORing an output bit sequence with a delayed (or shifted) version of itself. If the original sequence is sufficiently random, the XOR result should also be random, while serial correlation causes a bias. According to the present example, four noise conditioner output tests measure bias (no XOR), and bias in XOR with the sequence delayed by 1, 2, and 3-bit positions. These tests may be performed assuming $H > 0.5$.

The BIST may be initiated either by a rest or when a non-fatal alarm is generated by the noise conditioner tests. The following BIST tests may be employed, according to an example:

- Warm-up: Initial 100,000 cycles from the noise source are discarded before noise source tests (APT and RCP) are enabled. The status is BIST. If noise source tests alarm at any time outside warm-up, a DEAD state is entered.
- Output test: The first 1,024 bits from the noise conditioner are not output but are used as a self-test in BIST mode. There are four complete 256-bit blocks in this stage, and NCT alarms are counted: 0 alarm means a successful BIST, 1 or 2 alarms restarts the BIST from the beginning (but does not clear timeout), while 3 or 4 alarms cause a fatal DEAD state.
- Timeout: If the BIST test does not finish in 106 cycles (not enough output), this results in a fatal error DEAD status.

The foregoing tests and associated parameters can be adjusted to work well with a particular ring oscillator or an operating frequency. According to an example, the BIST state persists until polled at least once by a software driver 120 so that the driver can register even non-fatal errors.

Tests carried out on a two-stage noise conditioner of the kind illustrated in Figure 11 (the stages each being 8-state Blum B Conditioners) using a number of different 256 Mbit noise corpuses (Sample A-Sample D), are shown in the following table:

| Sample | $H_0$ | $Y_1$ | $H_1$ | $Y_2$ | $H_2$ | $H_{min}$ |
|---|---|---|---|---|---|---|
| Sample A | 0.1737 | 10.6% | 0.8059 | 25.0% | 0.7782 | 0.9738 |
| Sample B | 0.1699 | 13.3% | 0.7580 | 25.0% | 0.8687 | 0.9731 |
| Sample C | 0.3371 | 22.8% | 0.8047 | 24.9% | 0.8576 | 0.9624 |
| Sample E | 0.4243 | 22.5% | 0.8036 | 24.9% | 0.8493 | 0.9717 |

Entropy and yield assessments are made at the input 911 to the noise conditioner 910, $H_0$ $Y_1$, between the two Blum B Conditioners, $H_1$ $Y_2$, and at the output 912 from the noise conditioner 910, $H_2$ $Y_2$, not assuming that the data is IID (independent and identically distributed). In addition, $H_{min}$ is shown, which is the final minimum-entropy for the arrangement if the output is considered to produce IID bits (which is based on just bias). As can be seen for Sample A, $H_2$ is not always higher than $H_1$, which implies there is some variability in performance depending on the input samples, which is attributed to the nature of "randomness". However, in general, the first stage Blum B Conditioner is shown to increase entropy and yield significantly, while the second stage Blum B Conditioner is shown to increase entropy and yield gain, towards $H_{min}$.

As shown, total yield is $Y_1 Y_2 < 1/16$. Therefore, the conditioner may be seen to have a nominal output speed of >1 Mbps for a noise source that samples a ring oscillator against a 25 MHz reference clock, which, in practical terms, is fast enough for most applications that require a random bit stream.

Certain examples described herein may provide an output random bit sequence that is close to Independent and Identically Distributed (IID) and/or that contains at least 0.997 bits of Shannon entropy per output bit. This differs from comparative raw noise sources that are usually not IID and/or do not meet the aforementioned entropy criteria. The present examples provide "arithmetic" rather than cryptographic post processing in the form of the noise conditioners built into the entropy source. These are much more resource efficient than cryptographic conditioners and may be free of computational hardness assumptions, thus making them suitable for post-quantum computing and cryptography (e.g., making them essentially "quantum-safe").

It is noted that many "randomness tests" that are used in comparative random number generators may be suitable for evaluating randomness for Monte Carlo simulations but may be ill-suited to security and cryptographic applications. For example, cryptoanalysis with linear algebra shows that "random" bit sequences generated with linear-feedback shift registers used in certain random number generators may present a security risk. In these comparative cases, an internal state of a linear-feedback shift register may be derived from a relatively small amount of output, allowing future and past outputs to be reproduced with little effort. This may be a devastating outcome if the output of the "random" number generator is used for a cryptographic keyring. In contrast, the present examples provide random bit sequences that are well suited for cryptographic applications without a risk of past or future output discovery.

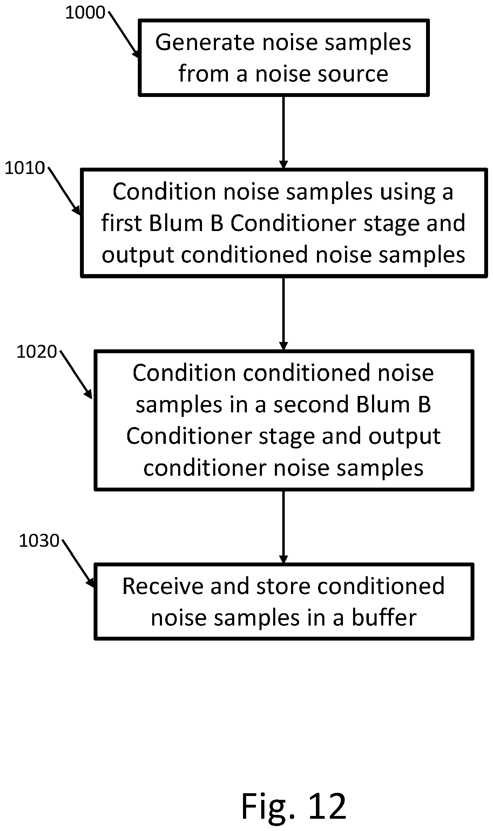

A flow diagram illustrating the operation of an entropy source according to an example is shown in Figure 12.

In a first step 1000, noise samples are generated by a noise source 905. Then 1010, a first Blum B Conditioner stage 913 of a noise conditioner 910 conditions the noise samples and, next 1020, the conditioned noise samples are further conditioned by a second Blum B Conditioner stage 914 of the noise conditioner 910. Next, the conditioned noise samples are stored in a buffer 915 from where a software driver 122 may poll and receive conditioned noise samples.

The preceding description has been presented to illustrate and describe examples of the principles described. This description is not intended to be exhaustive or to limit these principles to any precise form disclosed. Many modifications and variations are possible in light of the above teaching. For example, different noise sources may be employed to deliver random bits into a noise conditioner. Such noise sources may be 'on-chip' and comprise circuits or may be derived from external devices or systems. In addition, the form of the noise conditioner may vary. For instance, any number of Blum B Conditioners may be employed. There may only be one Blum B Conditioner, there may be two (as exemplified) or there may be more than two, for instance, 3, 4, 5 or more Blum B Conditioners. For each Blum B Conditioner, the number of states may differ from 8 in any number $2^k$. Or, one Blum B Conditioner may have 8-states and another may have a different number of states. The number of states in a Blum B Conditioner determines the configuration of the logic, for instance in terms of a number of stages in a shift register and associated logic to select an output (for instance) von Neumann debiaser. In other examples, the noise conditioner may comprise at least one Blum B Conditioner and one or more other stages that perform debiasing and/or decorrelation in other ways. Various other tests or alarms, with associated parameters and/or thresholds, may be applied to different configurations of entropy source. Noise conditioners, and indeed entropy sources more generally, according to examples herein, may be realized, without limitation, in hardware, such as hard-wired or configurable circuitry, in firmware, in software or in any appropriate combination of the foregoing, as determined by the use-case. An entropy source according to examples herein may be integrated with a central processing unit or operate and be realized independently thereof, for instance as a coprocessor or other separate processing unit of an overall computer/processing architecture. In other examples, the entropy source may be integrated into a standalone processing environment, for instance an embedded processor that may be deployed in a connected, IoT device or apparatus. In examples, the entropy source is adapted to be deployed in lightweight microcontrollers, reduced instruction set architectures, such as RISK-V, and/or processors adapted for post-quantum cryptography.

It is to be understood that any feature described in relation to any one example may be used alone, or in combination with other features described, and may also be used in combination with any features of any other of the examples, or any combination of any other of the examples.

Certain un-claimed examples will now be presented as a set of clauses.

In one case, a processing module or noise conditioner is provided for reducing bias and/or increasing the entropy of an output bit sequence compared to an input bit sequence. The processing module is arranged to output the output bit sequence with an output bit rate that varies according to the entropy of the input bit sequence, such that an increase in the entropy of the input bit sequence is associated with an increased output bit rate and a decrease in the entropy of the input bit sequence is associated with a decrease in the output bit rate.

The processing module may have an input to receive input bits from a source and an output to produce output bits for use in random number generation. The processing module may implement a $2^k$ state Markov Chain (e.g., where k=3), wherein each state has two entry transitions from one or more previous states and two exit transitions to one or more subsequent states. The processing module may comprise a processing block arranged to output bits according to Blum's Algorithm B, the processing block implementing the Markov Chain. The processing module may implement at least a first $2^k$ state Markov Chain and a second $2^J$ state Markov Chain, in series with the first Markov Chain. Both k and J may equal 3. The processing block may be arranged to output bits according to at least two sequential stages of Blum's Algorithm B, each stage implementing an instance of a Markov Chain.

In certain cases, a logic device is provided, comprising an input, selector and $2^L$ output logic cells, the selector arranged to select an output logic cell based on a sequence of L input bits from an input bit sequence received at the input, the selected output logic cell arranged to produce an output bit according to the logic in the output logic cell operating on an input bit value. The logic device may comprise a von Neumann cell as described in the above examples.

The logic device may comprise a shift register to receive the input bit sequence, wherein L stages of the shift register are arranged to address the selector to select the one of the $2^L$ output logic cells (e.g., where L=3). Each of the output logic cell may be arranged to perform a debiasing logic operation, wherein the debiasing logic operation may comprise a delayed von Neumann debiasing logic operation. The logic device may be arranged to output bits according to Blum's algorithm B and/or to implement a Markov Chain. The selector may be arranged to select output logic cells, on the basis of the input bit sequence, thereby to implement the Markov Chain.

In one case, a processing module as described above may comprise at least one logic device as also described above. In one case, two or more logic devices may be arranged in series and an output bit from a first of the logic devices is fed as an input bit into a second of the logic devices.

In one case, an entropy source for use in random number generation, may comprise a noise source and a noise conditioner in the form of a processing module as described above. A hardware circuit for use in random number generation, may comprise this entropy source. The noise source may comprise a ring oscillator, wherein the ring oscillator may comprise a plurality of invertors, for example three invertors, connected in a free-running loop. Preferably there are an odd number of invertors. The hardware circuit may comprise a buffer to hold a number of bits comprised in an outputted random bit sequence. The buffer may be arranged to be polled and deliver a number of bits of the held random bit sequence.

In one case, an adaptive rate entropy source is provided for reducing bias and/or increasing the entropy of an output bit sequence compared to an input bit sequence, the adaptive rate entropy source arranged to output the output bit sequence with an output bit rate that adapts according to the entropy of the input bit sequence, such that an increase in the entropy of the input bit sequence is associated with an increased output bit rate and a decrease in the entropy of the input bit sequence is associated with a decrease in the output bit rate.

In one case, a processing module is provided that is arranged to reduce bias and/or increase the entropy of an output bit sequence compared to an input bit sequence, the processing module being further arranged to output the output bit sequence with an output bit rate that varies according to the entropy of the input bit sequence, such that an increase in the entropy of the input bit sequence is associated with an increased output bit rate and a decrease in the entropy of the input bit sequence is associated with a decrease in the output bit rate, and thereby reduce bias and/or increase the entropy of the output bit sequence compared to the input bit sequence, wherein the output bit rate is reduced by discarding input bits that would otherwise lead to increased bias and/or reduced entropy.

In one case, a noise conditioner is provided comprising an input to receive an input bitstream having a first entropy and an output for delivering an output bitstream having a second, increased entropy compared to the first entropy. The noise conditioner may comprise: a shift register arrangement operative on each clock cycle of a system clock to load a next input bit of the input bitstream into the shift register arrangement; $2^k$ destination logic cells each arranged to perform a debiasing operation on the basis of the next input bit and a previous input bit of the input bitstream that was clocked into the respective destination logic cell and either output an output bit or not output an output bit according to the outcome of the debiasing operation performed by the respective destination logic cell; and a selector operative to select a destination logic cell on the basis of an address determined by a sequence of k previous input bits of the input bitstream that are loaded in the shift register arrangement, whereby each next input bit introduced into the shift register is also clocked into the selected logic cell to cause a respective debiasing operation to be performed, wherein, a sequence of addresses determined by the selector selects a respective sequence of destination logic cells in an order that corresponds with transitions of a predetermined $2^k$-state Markov Chain. The noise conditioner may comprise two processing blocks as described previously, a second processing block having the same form as and operating in series with the first-mentioned processing block.

## Claims

1. An entropy source (900) for use in random number generation, comprising:

   a noise source (905) to output a first sequence of bits (911);
   a noise conditioner (910) to receive the first sequence of bits (911) from the noise source (905) and to output a second sequence of decorrelated bits (912),

   the noise conditioner (910) comprising a plurality of noise conditioning stages (913, 914) communicatively coupled in series,
   each noise conditioning stage (913, 914) comprising:

   a *k*-bit shift register arrangement (808) to store a set of previous input bit values;
   a set of von Neumann cells (818) to perform von Neumann debiasing, each von Neumann cell having a state; and
   a selector (810) to select one of the set of von Neumann cells (818) to receive an input bit value and to conditionally generate an output bit value based on the bit values in the shift register arrangement, the state of

   the selected von Neumann cell being updated following selection;

   a buffer (915) to receive and store the second sequence of decorrelated bits from the noise conditioner (910), wherein the buffer (915) is arranged to be polled to deliver a number of bits as an output random bit sequence.

2. The entropy source (900) of claim 1, wherein the noise source (905) comprises a ring oscillator (905) and the ring oscillator (905) comprises a plurality of invertors (205) communicatively coupled in a free-running loop, the plurality of invertors comprising an odd number.

3. The entropy source (900) of claim 2, comprising a latch (235) to output sampled bits from the free-running loop based on a system clock signal.

4. The entropy source (900) of any one of claims 1 to 3, comprising a raw noise interface to provide the first sequence of bits (911).

5. The entropy source (900) of any one of claims 1 to 4, wherein each noise conditioning stage (913, 914) comprises an enable input (806), wherein a sequence of input bits is fed to the shift register and the selector when the enable input (806) is active.

6. The entropy source (900) of claim 5, wherein an enable input (806) of a first noise conditioning stage (913) in the plurality of noise conditioning stages (913, 914) is output by the first noise conditioning stage (913) and is passed as an enable input (806) to a second noise conditioning stage (914) in the plurality of noise conditioning stages (913, 914).

7. The entropy source (900) of claim 6, wherein each of the plurality of noise conditioning stages (913, 914) comprise a clock input, wherein each of the plurality of noise conditioning stages (913, 914) are activated when the clock input and the enable input are active.

8. The entropy source (900) of any one of claims 1 to 7, wherein each von Neumann (818) cell has five possible states and is configured to, when selected, transition between said states based on an input bit value and the current state of the von Neumann cell.

9. The entropy source (900) of claim 8, wherein, for the von Neumann cell (818):

in a state $\lambda$, the state is set to the input bit value;
in a state 0, if the input bit value is 1 then the state is set to an "H" state representing a first value otherwise the state is set to the $\lambda$ state;
in a state 1, if the input bit value is 0 then the state is set to an "T" state representing a second value otherwise the state is set to the $\lambda$ state;
in the "H" state, an output is set to 0 and the state is set to the input bit value; and
in the "T" state, an output is set to 1 and the state is set to the input bit value.

10. The entropy source (900) of any of claims 1 to 9, wherein:

the entropy source (900) comprises a hardware circuit that is polled from a software driver, and
the software driver comprises a cryptographic conditioner (126) that applies a cryptographic operation to the output random bit sequence supplied by the entropy source (900) before supplying data derived from the cryptographic conditioner (126) to a software application (160).

11. The entropy source (900) of any of claims 1 to 10, comprising:
a register (940) indicating an operational status of the entropy source (900), wherein the operational status represents at least one of the following states:

a first state indicating the buffer (915) is able to supply the output random bit sequence;
a second state indicating that the buffer (915) is not yet full;
a third state indicating a test state; and
a fourth state indicating a fault.

12. The entropy source (900) of claim 11, comprising one or more online tests, wherein the one or more online tests (920, 930) comprise one or more of:

a repetition count test (922) that counts a number of repeated bits output by the noise source (905) and outputs an alarm responsive to the number being above a defined threshold; and
an adaptive proportion test (924) that compares a number of 0 bits and 1 bits within a predefined window of bit values output by the noise source (905).

13. The entropy source (900) of any one of claims 1 to 12, wherein the entropy source is configured to reduce bias and/or increase the entropy of the output random bit sequence compared to the first sequence of bits, the entropy source (900) being arranged to output the output random bit sequence with an output bit rate that varies according to the entropy of the first sequence of bits, such that an increase in the entropy of the first sequence of bits is associated with an increased output bit rate and a decrease in the entropy of the first sequence of bits is associated with a decrease in the output bit rate, and thereby reduce bias and/or increase the entropy of the output random bit sequence compared to the first sequence of bits, wherein the output bit rate is reduced by discarding input bits that would otherwise lead to increased bias and/or reduced entropy.

14. The entropy source (900) of any one of claims 1 to 13, wherein:

the k-bit shift register arrangement is operative on each clock cycle of a system clock to load a next input bit of the input bitstream into the shift register arrangement;

the set of von Neumann cells comprises $2^k$ destination logic cells each arranged to perform a debiasing operation on the basis of the next input bit and a previous input bit of the input bitstream that was clocked into the respective destination logic cell and either output an output bit or not output an output bit according to the outcome of the debiasing operation performed by the respective destination logic cell; and

the selector is operative to select a destination logic cell on the basis of an address determined by a sequence of $k$ previous input bits of the input bitstream that are loaded in the shift register arrangement, whereby each next input bit introduced into the shift register is also clocked into the selected logic cell to cause a respective debiasing operation to be performed,

wherein, a sequence of addresses determined by the selector selects a respective sequence of destination logic cells in an order that corresponds with transitions of a predetermined $2^k$-state Markov Chain.

15. A non-transitory computer-readable storage medium comprising instructions which, when executed by a computer, cause the computer to implement the entropy source (900) of claim 1.

**Patentansprüche**

1. Entropiequelle (900) zur Verwendung in der Zufallszahlenerzeugung, umfassend:

eine Geräuschquelle (905), um eine erste Sequenz von Bits (911) auszugeben;

einen Geräuschkonditionierer (910), um die erste Sequenz von Bits (911) von der Geräuschquelle (905) zu empfangen und eine zweite Sequenz von dekorrelierten Bits (912) auszugeben,

der Geräuschkonditionierer (910) umfassend eine Vielzahl von Geräuschkonditionierungsstufen (913, 914), die kommunikativ in Reihe gekoppelt ist,

jede Geräuschkonditionierungsstufe (913, 914) umfassend:

eine $k$-Bitverschiebungsregisteranordnung (808), um einen Satz von vorherigen Eingangsbitwerten zu speichern;

einen Satz von von-Neumann-Zellen (818), um eine von-Neumann-Entvorspannung durchzuführen, wobei jede von-Neumann-Zelle einen Zustand aufweist; und

einen Selektor (810), um einen von dem Satz von von-Neumann-Zellen (818) zu selektieren, um einen Eingangsbitwert zu empfangen und einen Ausgangsbitwert basierend auf den Bitwerten in der Schieberegisteranordnung bedingt zu erzeugen, wobei der Zustand der selektierten von-Neumann-Zelle nach einer Selektion aktualisiert wird;

einen Puffer (915), um die zweite Sequenz dekorrelierter Bits aus dem Geräuschkonditionierer (910) zu empfangen und speichern, wobei der Puffer (915) angeordnet ist, um eine Anzahl von Bits als eine Ausgangszufallsbitsequenz abzugeben.

2. Entropiequelle (900) nach Anspruch 1, wobei die Geräuschquelle (905) einen Ringoszillator (905) umfasst und der Ringoszillator (905) eine Vielzahl von Wechselrichtern (205) umfasst, die in einer Freilaufschleife kommunikativ gekoppelt ist, die Vielzahl von Wechselrichtern umfassend eine ungerade Anzahl.

3. Entropiequelle (900) nach Anspruch 2, umfassend einen Latch (235), um abgetastete Bits aus der Freilaufschleife basierend auf einem Systemtaktsignal auszugeben.

4. Entropiequelle (900) nach einem der Ansprüche 1 bis 3, umfassend eine Rohgeräuschschnittstelle, um die erste Sequenz von Bits (911) bereitzustellen.

5. Entropiequelle (900) nach einem der Ansprüche 1 bis 4, wobei jede Geräuschkonditionierungsstufe (913, 914) einen Freigabeeingang (806) umfasst, wobei eine Sequenz von Eingangsbits dem Schieberegister und dem Selektor zugeführt wird, wenn der Freigabeeingang (806) aktiv ist.

**6.** Entropiequelle (900) nach Anspruch 5, wobei ein Freigabeeingang (806) einer ersten Geräuschkonditionierungsstufe (913) in der Vielzahl von Geräuschkonditionierungsstufen (913, 914) durch die erste Geräuschkonditionierungsstufe (913) ausgegeben wird und als ein Freigabeeingang (806) an eine zweite Geräuschkonditionierungsstufe (914) in der Vielzahl von Geräuschkonditionierungsstufen (913, 914) weitergeleitet wird.

**7.** Entropiequelle (900) nach Anspruch 6, wobei jede der Vielzahl von Geräuschkonditionierungsstufen (913, 914) einen Takteingang umfasst, wobei jede der Vielzahl von Geräuschkonditionierungsstufen (913, 914) aktiviert ist, wenn der Takteingang und der Freigabeeingang aktiv sind.

**8.** Entropiequelle (900) nach einem der Ansprüche 1 bis 7, wobei jede von-Neumann(818)-Zelle fünf mögliche Zustände aufweist und konfiguriert ist, um, wenn sie selektiert ist, einen Übergang zwischen den Zuständen basierend auf einem Eingangsbitwert und dem aktuellen Zustand der von-Neumann-Zelle zu erreichen.

**9.** Entropiequelle (900) nach Anspruch 8, wobei, für die von-Neumann-Zelle (818):

in einem Zustand λ, der Zustand auf den Eingangsbitwert eingestellt ist;
in einem Zustand 0, falls der Eingangsbitwert 1 ist, dann der Zustand auf einen "H"-Zustand eingestellt wird, der einen ersten Wert darstellt, ansonsten, der Zustand auf den λ-Zustand eingestellt wird;
in einem Zustand 1, falls der Eingangsbitwert 0 ist, dann der Zustand auf einen "T"-Zustand eingestellt wird, der einen zweiten Wert darstellt, ansonsten, der Zustand auf den λ-Zustand eingestellt wird;
in dem Zustand "H", ein Ausgang auf 0 eingestellt wird und der Zustand auf den Eingangsbitwert eingestellt wird; und
in dem Zustand "T", ein Ausgang auf 1 eingestellt wird und der Zustand auf den Eingangsbitwert eingestellt wird.

**10.** Entropiequelle (900) nach einem der Ansprüche 1 bis 9, wobei:

die Entropiequelle (900) eine Hardwareschaltung umfasst, die von einem Softwaretreiber abgefragt wird, und der Softwaretreiber einen kryptografischen Konditionierer (126) umfasst, der einen kryptografischen Vorgang an die Ausgangszufallsbitsequenz anwendet, die durch die Entropiequelle (900) geliefert wird, bevor Daten, die von dem kryptografischen Konditionierer (126) abgeleitet werden, an eine Softwareanwendung (160) geliefert werden.

**11.** Entropiequelle (900) nach einem der Ansprüche 1 bis 10, umfassend:
ein Register (940), das einen Betriebszustand der Entropiequelle (900) angibt, wobei der Betriebszustand mindestens einen der folgenden Zustände darstellt:

einen ersten Zustand, der angibt, dass der Puffer (915) die Ausgangszufallsbitsequenz liefern kann;
einen zweiten Zustand, der angibt, dass der Puffer (915) noch nicht voll ist;
einen dritten Zustand, der einen Testzustand angibt; und
einen vierten Zustand, der einen Fehler angibt.

**12.** Entropiequelle (900) nach Anspruch 11, umfassend einen oder mehrere Online-Tests, wobei der eine oder die mehreren Online-Tests (920, 930) eines oder mehrere umfassen von:

einen Wiederholungszähltest (922), der eine Anzahl von wiederholten Bits zählt, die durch die Geräuschquelle (905) ausgegeben werden, und einen Alarm als Reaktion darauf ausgibt, dass die Anzahl über einem definierten Schwellenwert liegt; und
einen adaptiven Verhältnistest (924), der eine Anzahl von 0 Bits und 1 Bits innerhalb eines vordefinierten Fensters von Bitwerten vergleicht, die von der Geräuschquelle (905) ausgegeben werden.

**13.** Entropiequelle (900) nach einem der Ansprüche 1 bis 12, wobei die Entropiequelle konfiguriert ist, um eine Vorspannung der Ausgangszufallsbitsequenz im Vergleich zu der ersten Sequenz von Bits zu reduzieren und/oder die Entropie dieser im Vergleich zu der ersten Sequenz von Bits zu erhöhen, wobei die Entropiequelle (900) angeordnet ist, um die Ausgangszufallsbitsequenz mit einer Ausgangsbitrate auszugeben, die gemäß der Entropie der ersten Sequenz von Bits variiert, sodass eine Erhöhung der Entropie der ersten Sequenz von Bits einer erhöhten Ausgangsbitrate zugeordnet ist und eine Abnahme der Entropie der ersten Sequenz von Bits einer Abnahme der Ausgangsbitrate zugeordnet ist, und wobei dadurch das Reduzieren der Vorspannung und/oder das Erhöhen der Entropie der Ausgangswahlbitsequenz im Vergleich zu der ersten Sequenz von Bits, wobei die Ausgangsbitrate durch Verwerfen von Eingangsbits reduziert wird, die ansonsten zu einer erhöhten Vorspannung und/oder einer reduzierten Entropie führen würden.

**14.** Entropiequelle (900) nach einem der Ansprüche 1 bis 13, wobei:

die k-Bit-Schieberegisteranordnung auf jedem Taktzyklus eines Systemtakts betriebsfähig ist, um ein nächstes Eingangsbit des Eingangsbitstroms in die Schieberegisteranordnung zu laden;

der Satz von von-Neumann-Zellen $2^k$-Ziellogikzellen umfasst, die jeweils angeordnet sind, um einen Entvorspannvorgang auf der Basis des nächsten Eingangsbits und eines vorherigen Eingangsbits des Eingangsbitstroms durchzuführen, der in die jeweilige Ziellogikzelle getaktet wurde und entweder ein Ausgangsbit ausgibt oder kein Ausgangsbit gemäß dem Ergebnis des Abspannvorgangs ausgibt, der durch die jeweilige Ziellogikzelle durchgeführt wird; und

der Selektor betriebsfähig ist, um eine Ziellogikzelle auf der Basis einer Adresse zu selektieren, die durch eine Sequenz von k vorherigen Eingangsbits des Eingangsbitstroms bestimmt wird, die in die Schieberegisteranordnung geladen werden, wodurch jedes nächste Eingangsbit, das in das Schieberegister eingeführt wird, auch in die selektierte Logikzelle getaktet wird, um einen jeweiligen Entvorspannungsvorgang zu veranlassen, durchgeführt zu werden,

wobei eine Sequenz von Adressen, die durch den Selektor bestimmt werden, eine jeweilige Sequenz von Ziellogikzellen in einer Reihenfolge selektiert, die den Übergängen eines zuvor bestimmten $2^k$-Zustand Markov-Kette entspricht.

**15.** Nicht flüchtiges computerlesbares Speichermedium, umfassend Anweisungen, die, wenn sie durch einen Computer ausgeführt werden, den Computer veranlassen, die Entropiequelle (900) nach Anspruch 1 zu implementieren.

## Revendications

**1.** Source d'entropie (900) pour utilisation dans la génération de nombres aléatoires, comprenant :

une source de bruit (905) pour délivrer en sortie une première séquence de bits (911) ;

un conditionneur de bruit (910) pour recevoir la première séquence de bits (911) depuis la source de bruit (905) et pour délivrer en sortie une seconde séquence de bits décorrélés (912),

le conditionneur de bruit (910) comprenant une pluralité d'étages de conditionnement de bruit (913, 914) accouplés par communications en série,

chaque étage de conditionnement de bruit (913, 914) comprenant :

un agencement de registre à décalage de k bits (808) pour stocker un ensemble de valeurs de bits d'entrée précédentes ;

un ensemble de cellules de von Neumann (818) pour mettre en oeuvre un débiaisage de von Neumann, chaque cellule de von Neumann ayant un état ; et

un sélecteur (810) pour sélectionner l'une parmi l'ensemble de cellules de von Neumann (818) pour recevoir une valeur de bit d'entrée et pour générer conditionnellement une valeur de bit de sortie en fonction des valeurs de bit dans l'agencement de registre à décalage, l'état de la cellule de von Neumann sélectionnée étant mis à jour à la suite de la sélection ;

un tampon (915) pour recevoir et stocker la seconde séquence de bits décorrélés depuis le conditionneur de bruit (910), le tampon (915) étant agencé pour être interrogé pour délivrer un nombre de bits en tant que séquence aléatoire de bits de sortie.

**2.** Source d'entropie (900) selon la revendication 1, dans laquelle la source de bruit (905) comprend un oscillateur en anneau (905) et l'oscillateur en anneau (905) comprend une pluralité d'inverseurs (205) accouplés par communications dans une boucle à exécution libre, la pluralité d'inverseurs comprenant un nombre impair.

**3.** Source d'entropie (900) selon la revendication 2, comprenant un verrou (235) pour délivrer en sortie des bits échantillonnés à partir de la boucle à exécution libre en fonction d'un signal d'horloge système.

**4.** Source d'entropie (900) selon l'une quelconque des revendications 1 à 3, comprenant une interface de bruit brut pour fournir la première séquence de bits (911).

**5.** Source d'entropie (900) selon l'une quelconque des revendications 1 à 4, dans laquelle chaque étage de conditionnement de bruit (913, 914) comprend une entrée de validation (806), une séquence de bits d'entrée étant alimentée au registre à décalage et au sélecteur lorsque l'entrée de validation (806) est active.

**6.** Source d'entropie (900) selon la revendication 5, dans laquelle une entrée de validation (806) d'un premier étage de conditionnement de bruit (913) dans la pluralité d'étages de conditionnement de bruit (913, 914) est délivrée en sortie par le premier étage de conditionnement de bruit (913) et est transmise en tant qu'entrée de validation (806) à un second étage de conditionnement de bruit (914) dans la pluralité d'étages de conditionnement de bruit (913, 914).

**7.** Source d'entropie (900) selon la revendication 6, dans laquelle chacun parmi la pluralité d'étages de conditionnement de bruit (913, 914) comprend une entrée d'horloge, chacun parmi la pluralité d'étages de conditionnement de bruit (913, 914) étant activé lorsque l'entrée d'horloge et l'entrée de validation sont actives.

**8.** Source d'entropie (900) selon l'une quelconque des revendications 1 à 7, dans laquelle chaque cellule de von Neumann (818) a cinq états possibles et est configurée pour, lorsqu'elle est sélectionnée, effectuer une transition entre lesdits états en fonction d'une valeur de bit d'entrée et de l'état actuel de la cellule de von Neumann.

**9.** Source d'entropie (900) selon la revendication 8, dans laquelle, pour la cellule de von Neumann (818) :

dans un état $\lambda$, l'état est réglé sur la valeur de bit d'entrée ;
dans un état 0, si la valeur de bit d'entrée est 1 alors l'état est réglé sur un état « H » représentant une première valeur, autrement l'état est réglé sur l'état $\lambda$ ;
dans un état 1, si la valeur de bit d'entrée est 0 alors l'état est réglé sur un état « T » représentant une seconde valeur, autrement l'état est réglé sur l'état $\lambda$ ;
dans l'état « H », une sortie est réglée sur 0 et l'état est réglé sur la valeur de bit d'entrée ; et dans l'état « T », une sortie est réglée sur 1 et l'état est réglé sur la valeur de bit d'entrée.

**10.** Source d'entropie (900) selon l'une quelconque des revendications 1 à 9, dans laquelle :

la source d'entropie (900) comprend un circuit matériel qui est interrogé à partir d'un pilote logiciel, et
le pilote logiciel comprend un conditionneur cryptographique (126) qui applique une opération cryptographique à la séquence aléatoire de bits de sortie fournie par la source d'entropie (900) avant de fournir des données dérivées du conditionneur cryptographique (126) à une application logicielle (160).

**11.** Source d'entropie (900) selon l'une quelconque des revendications 1 à 10, comprenant :
un registre (940) indiquant un statut opérationnel de la source d'entropie (900), le statut opérationnel représentant au moins l'un des états suivants :

un premier état indiquant que le tampon (915) est capable de fournir la séquence aléatoire de bits de sortie ;
un deuxième état indiquant que le tampon (915) n'est pas encore plein ;
un troisième état indiquant un état de test ; et
un quatrième état indiquant un défaut.

**12.** Source d'entropie (900) selon la revendication 11, comprenant un ou plusieurs tests en ligne, le ou les tests en ligne (920, 930) comprenant un ou plusieurs parmi :

un test de comptage de répétitions (922) qui compte un nombre de bits répétés délivrés en sortie par la source de bruit (905) et délivre en sortie une alarme en réponse au nombre étant au-dessus d'un seuil défini ; et
un test de proportionnalité adaptatif (924) qui compare un nombre de bits 0 et de bits 1 au sein d'une fenêtre prédéfinie de valeurs de bit délivrées en sortie par la source de bruit (905).

**13.** Source d'entropie (900) selon l'une quelconque des revendications 1 à 12, la source d'entropie étant configurée pour réduire un biais et/ou augmenter l'entropie de la séquence aléatoire de bits de sortie par comparaison avec la première séquence de bits, la source d'entropie (900) étant agencée pour délivrer en sortie la séquence aléatoire de bits de sortie avec un débit de bits de sortie qui varie selon l'entropie de la première séquence de bits, de sorte qu'une augmentation de l'entropie de la première séquence de bits est associée à un débit de bits de sortie augmenté et une diminution de l'entropie de la première séquence de bits est associée à une diminution du débit de bits de sortie, et de ce fait réduire le biais et/ou augmenter l'entropie de la séquence aléatoire de bits de sortie par comparaison avec la première séquence de bits, le débit de bits de sortie étant réduit en écartant des bits d'entrée qui entraîneraient autrement un biais augmenté et/ou une entropie réduite.

14. Source d'entropie (900) selon l'une quelconque des revendications 1 à 13, dans laquelle :

l'agencement de registre à décalage de k bits est opérationnel sur chaque cycle d'horloge d'une horloge système pour charger un bit d'entrée suivant du flux de bits d'entrée dans l'agencement de registre à décalage ;

l'ensemble de cellules de von Neumann comprend $2^k$ cellules logiques de destination agencées chacune pour mettre en oeuvre une opération de débiaisage en fonction du bit d'entrée suivant et d'un bit d'entrée précédent du flux de bits d'entrée qui a été cadencé dans la cellule logique de destination respective et soit délivrer en sortie un bit de sortie soit ne pas délivrer en sortie un bit de sortie selon le résultat de l'opération de débiaisage mise en oeuvre par la cellule logique de destination respective ; et

le sélecteur est opérationnel pour sélectionner une cellule logique de destination en fonction d'une adresse déterminée par une séquence de k bits d'entrée précédents du flux de bits d'entrée qui sont chargés dans l'agencement de registre à décalage, moyennant quoi chaque bit d'entrée suivant introduit dans le registre à décalage est également cadencé dans la cellule logique sélectionnée pour amener une opération de débiaisage respective à être mise en oeuvre,

dans laquelle, une séquence d'adresses déterminée par le sélecteur sélectionne une séquence respective des cellules logiques de destination dans un ordre qui correspond à des transitions d'une chaîne de Markov à $2^k$ états prédéterminée.

15. Support de stockage non transitoire lisible par ordinateur comprenant des instructions qui, lorsqu'elles sont exécutées par un ordinateur, amènent l'ordinateur à implémenter la source d'entropie (900) selon la revendication 1.

Fig. 1

FIG. 2

FIG. 3

FIG. 4

FIG. 5

FIG. 6

FIG. 7

Fig. 8

Fig. 9

FIG. 10a

FIG. 10b

EP 4 252 106 B1

Fig. 11

1000 → Generate noise samples from a noise source

1010 → Condition noise samples using a first Blum B Conditioner stage and output conditioned noise samples

1020 → Condition conditioned noise samples in a second Blum B Conditioner stage and output conditioner noise samples

1030 → Receive and store conditioned noise samples in a buffer

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M BLUM.** Independent unbiased coin flips from a correlated biased source - a finite state Markov Chain. *Combinatorica,* 1986, vol. 6 (2), 97-108

- **DAVID JOHNSTON ; DE GRUYTER.** Random Number Generators - Principles and Practices. *A Guide for Engineers and Programmers,* 2018